(19) Europäisches Patentamt
European Patent Office
Office européen des brevets

(11) **EP 1 713 221 B1**

(12) **EUROPÄISCHE PATENTSCHRIFT**

(45) Veröffentlichungstag und Bekanntmachung des Hinweises auf die Patenterteilung:
**26.09.2007 Patentblatt 2007/39**

(51) Int Cl.:
**H04L 25/03** *(2006.01)*

(21) Anmeldenummer: **05007984.7**

(22) Anmeldetag: **12.04.2005**

(54) **Verfahren zur Reduzierung einer Intersymbol-Interferenzenergie**

Method of reducing the energy of intersymbol interference

Procédé de réduction de l'énergie de l'interférence intersymboles

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**18.10.2006 Patentblatt 2006/42**

(73) Patentinhaber: **NOKIA SIEMENS NETWORKS GMBH & CO. KG**
**81541 München (DE)**

(72) Erfinder: **Wolff, Gunter, Dr.**
**89081 Ulm (DE)**

(56) Entgegenhaltungen:
**EP-A- 0 396 049          WO-A-02/091651**

# EP 1 713 221 B1

**Beschreibung**

Die Erfindung betrifft ein Verfahren zur Reduzierung einer Intersymbol-Interferenzenergie, die durch Faltung einer Kanalimpulsantwort eines Übertragungskanals mit einem Grenzbereich eines ersten Symbols bei einem zum ersten Symbol vorhergehend übertragenen zweiten Symbol verursacht wird und die durch Faltung der Kanalimpulsantwort des Übertragungskanals mit einem Grenzbereich des ersten Symbols bei einem zum ersten Symbol nachfolgend übertragenen dritten Symbol verursacht wird.

Bei einer Signalübertragung werden gesendete Symbole bedingt durch Eigenschaften des Übertragungskanals bzw. des Übertragungsmediums mehrfach verzögert und überlagert empfangen.

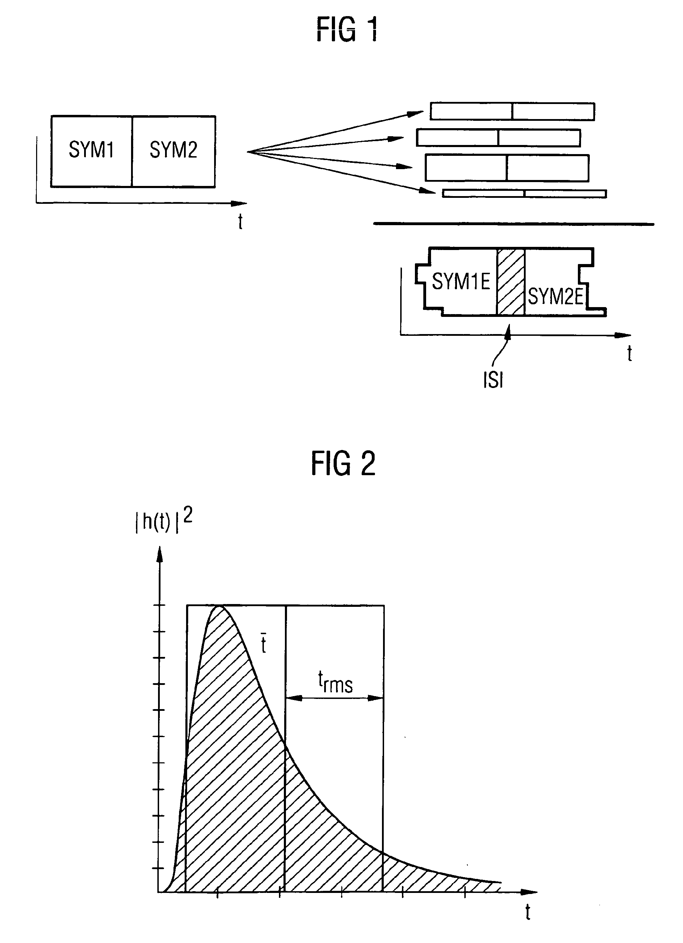

FIG 1 zeigt in einer Prinzipdarstellung eine Intersymbolinterferenz ISI, die durch zwei über einen Übertragungskanal gesendete Symbole SYM1 und SYM2 gebildet wird. Die beiden Symbole SYM1 und SYM2 werden durch Mehrfachreflexionen jeweils verschieden verzögert empfangen. Entsprechend empfangene Symbole SYM1E und SYM2E weisen durch Überlagerung in einem Übergangsbereich die Intersymbol-Interferenz ISI als Störungen auf.

Das Verhalten des Übertragungskanals bzw. des Übertragungsmediums kann durch eine Kanalimpulsantwort $h(t)$ beschrieben werden. Charakteristisch für die Kanalimpulsantwort $h(t)$ ist einerseits eine mittlere Verzögerungszeit $\bar{t}$ und andererseits eine zeitliche Dauer $t_{rms}$, die als "Aufspreizung einer Kanalverzögerung" bzw. als "channel delay spread" bezeichnet wird.

Die mittlere Verzögerungszeit $\bar{t}$ ist dabei die mittlere Signallaufzeit, die für die Übertragung des Signals über den Übertragungskanal benötigt wird, wobei das Signal mehrfach verzögerte Signalkomponenten aufweist.

Die zeitliche Dauer $t_{rms}$ kennzeichnet eine mittlere zeitliche Dispersion unter den mehrfach verzögerten Signalkomponenten.

FIG 2 zeigt anhand einer vereinfachten Funktion $|h(t)|^2$, die eine zeitlich abhängige Leistungsverteilung einer Kanalimpulsantwort $h(t)$ darstellt, die mittlere Verzögerungszeit $\bar{t}$ und die mittlere Dauer $t_{rms}$.

Diese sind wie folgt definiert:

$$\bar{t} = \frac{\int t|h(t)|^2 \, dt}{\int |h(t)|^2 \, dt} \qquad t_{rms} = \sqrt{\frac{\int (t-\bar{t})^2 |h(t)|^2 \, dt}{\int |h(t)|^2 \, dt}}$$

Bei bekannten Kanalschätzverfahren wird mit großem Aufwand die Kanalimpulsantwort $h(t)$ nachgebildet. Zu diesem Zweck werden vorbekannte Symbole bzw. Symbolfolgen zwischen einem Sender und einem Empfänger übertragen. Basierend auf den empfangenen Symbolen wird die Kanalimpulsantwort $h(t)$ ermittelt, aus der auf die Übertragungskanaleigenschaften geschlossen werden kann.

Um schnell erfolgende Änderungen von Übertragungskanaleigenschaften, wie sie beispielsweise für Mobilfunkübertragungen typisch sind, schnell erfassen zu können, werden die vorbekannten Symbole entsprechend oft übertragen. Dadurch wird jedoch nachteilig Übertragungskapazität für eine durchzuführende Nutzsymbol-Übertragungskapazität gebunden.

Bei einer OFDM-Übertragung, beispielsweise im Rahmen einer Mobilfunksanwendung, ist es bekannt, zur Verringerung der Intersymbol-Interferenzen bei jedem Symbol ein so genanntes Schutzintervall der Zeitdauer $T_g$ vorzusehen. Innerhalb dieses Schutzintervalls wird der aus dem Stand der Technik bekannte "Cyclic Prefix" übertragen. Der Cyclic Prefix wird gebildet, indem am Ende eines betrachteten Symbols eine Symbolfortsetzung für die Zeitdauer $T_g$ berechnet wird und dieser berechnete Symbolverlauf dem eigentlichen Symbol vorangestellt wird.

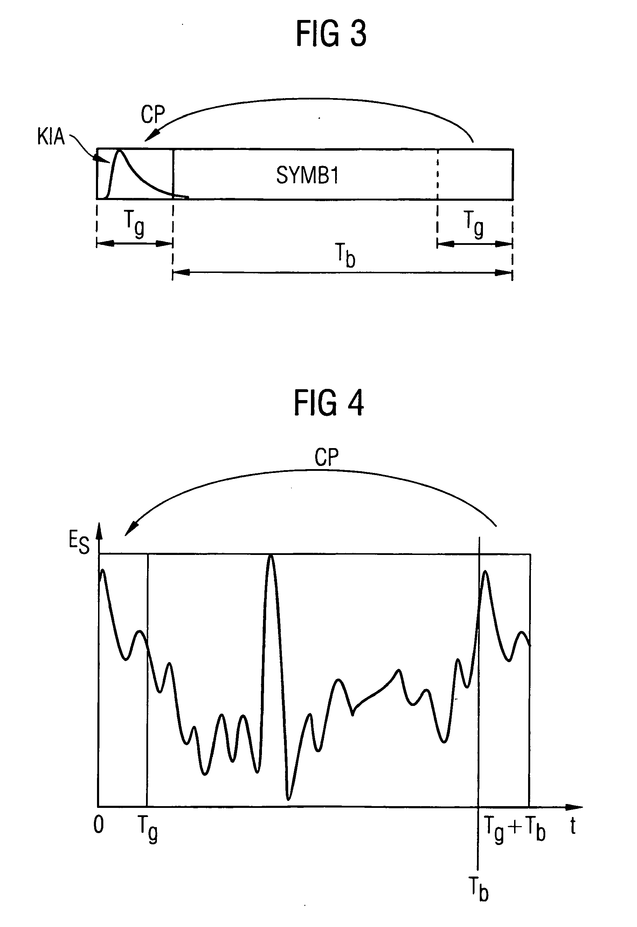

FIG 3 zeigt ein Multicarrier-Symbol SYMB1 mit einem Cyclic Prefix CP, der dem eigentlichen Symbol SYMB1 der Zeitdauer $T_b$ vorangestellt ist. Der Cyclic Prefix CP ist dabei identisch zum Ende des Symbols SYMB1 der Zeitdauer Tg.

Ein vor dem Symbol SYMB1 übertragenens älteres Symbol (hier nicht dargestellt) klingt mit seiner Kanalimpulsantwort KIA im wesentlichen innerhalb des Schutzintervalls der Zeitdauer $T_g$ aus und überlagert sich nur noch geringfügig mit dem nachfolgend übertragenen Symbol SYMB1.

Aus den Druckschriften EP 0 396 049 und WO 02/09651 ist es bekannt durch zyklische Rotation in Zeitbereich eine Intersymbol-Interferenzenergie zu Verringern. Jedoch werden gemäß diesen bekannten Verfahren die Einflüsse des Übertragungkanals nicht in betracht gezogen.

Es ist Aufgabe der vorliegenden Erfindung, ein Verfahren anzugeben, mit dem Intersymbol-Interferenzen mit geringem zusätzlichen Aufwand und ohne Reduzierung einer Nutzsymbol-Übertragungskapazität weiter verringert werden können.

Diese Aufgabe wird durch die Merkmale des Patentanspruchs 1 gelöst. Vorteilhafte Weiterbildungen sind in den Unteransprüchen angegeben.

Durch das erfindungsgemäße Verfahren wird die Intersymbol-Interferenz verringert und damit eine verbesserte Übertragungsqualität ermöglicht.

Durch Verwendung des erfindungsgemäßen Verfahrens wird ermöglicht, eine kürzere standardisierte Schutzintervall-Zeitdauer zu wählen, um vorteilhaft eine Erhöhung der Nutzsymbol-Übertragungskapazität zu ermöglichen.

Die verbesserte Übertragungsqualität ermöglicht neben einer höheren Nutzdatenrate und einer größeren Störunempfindlichkeit eine größere Übertragungsreichweite sowie eine höhere Übertragungszuverlässigkeit.

Das erfindungsgemäße Verfahren ist insbesondere für Multicarrier-Symbole einer OFDM-Übertragung geeignet.

Nachfolgend wird die Erfindung anhand einer Zeichnung näher erläutert. Dabei zeigt:

FIG 1        die eingangs beschriebene und durch zwei gesendete Symbole gebildete Intersymbolinterferenz in einer Prinzipdarstellung,

FIG 2        die eingangs beschriebene Funktion $|h(t)|^2$,

FIG 3        das eingangs beschriebene Symbol mit Cyclic Prefix,

FIG 4        eine Energieverteilung eines Multicarrier-Symbols,

FIG 5        zeitliche Energieverteilungen eines Multicarrier-Symbols mit ursprünglichen und verschobenen Symbolgrenzen,

FIG 6        eine beispielhafte Näherung $h_N(t)$ einer Kanalimpulsantwort,

FIG 7        eine Ermittlung von Wichtungsfunktionen aus der Näherung $h_N(t)$,

FIG 8        eine beispielhafte erste Implementierung zur Berechnung einer Multicarrier-Symbol-Energieverteilung

FIG 9        eine beispielhafte zweite Implementierung zur Berechnung der Multicarrier-Symbol-Energieverteilung, und die

FIG 10, FIG 11        beispielhafte weitere Implementierungen.

FIG 4 zeigt zur Veranschaulichung der Erfindung eine typische Energieverteilung eines Multicarrier-Symbols, dessen Energie Es entlang der vertikalen Achse aufgetragen ist. Entlang der horizontalen Achse ist der zeitliche Verlauf aufgetragen.

Das erfindungsgemäße Verfahren nutzt die Erkenntnis, dass die Symbolenergie nicht gleichmäßig über eine Symbol-Zeitdauer $T_b$ verteilt ist.

Das Intervall $[0, T_g]$ repräsentiert den Cyclic Prefix CP und beinhaltet eine Kopie der Energieverteilung $E_S$ des Symbols innerhalb des Intervalls $[T_b, T_g+T_b]$.

Eine Intersymbol-Interferenzenergie entsteht durch Faltung des um den Cyclic Prefix verlängerten Symbols mit der Kanalimpulsantwort $h(t)$.

Dabei sind wesentliche bzw. größte Beiträge zur Intersymbol-Interferenzenergie dem Beginn des Cyclic Prefix und dem Ende des Symbols zuzuordnen. Energiebeiträge, die durch Faltung der Kanalimpulsantwort mit dem Anfang bzw. mit dem Ende jedes Multicarrier-Symbols gebildet werden, überlagern sich mit jeweils vorhergehend bzw. nachfolgend übertragenen Multicarrier-Symbolen und bilden somit die störenden Intersymbol-Interferenzen.

Die Intersymbol-Interferenz ist zum einen von der Kanalimpulsantwort $h(t)$ abhängig, die jedoch durch den gewählten Übertragungskanal nicht beeinflussbar ist. Zum anderen ist die Intersymbol-Interferenz zusätzlich von der Energie abhängig, die das Multicarrier-Symbol inklusive dem Cyclic Prefix an den Symbolgrenzen aufweist.

Erfindungsgemäß wird sendeseitig eine Verschiebung der Symbolgrenzen um eine Zeitdauer $t_R$ durchgeführt, wodurch die Intersymbol-Interferenzen minimiert werden. Dies wird erreicht, indem im Zeitbereich durch eine zyklische Rotation um die Zeitdauer $t_R$ der einzelnen Symboldaten (Samples) eines ursprünglichen Symbols S(t) - d.h. ohne den Cyclic Prefix - ein neues Symbol $S_R(t_R,t)$ gebildet wird. Die Intersymbol-Interferenzenergie des neuen Multicarrier-Symbols $S_R(t_R,t)$ ist von der Lage der verschobenen Symbolgrenze bzw. von der gewählten Zeitdauer $t_R$ abhängig und kann durch geeignete Wahl der Zeitdauer $t_R$ minimiert werden.

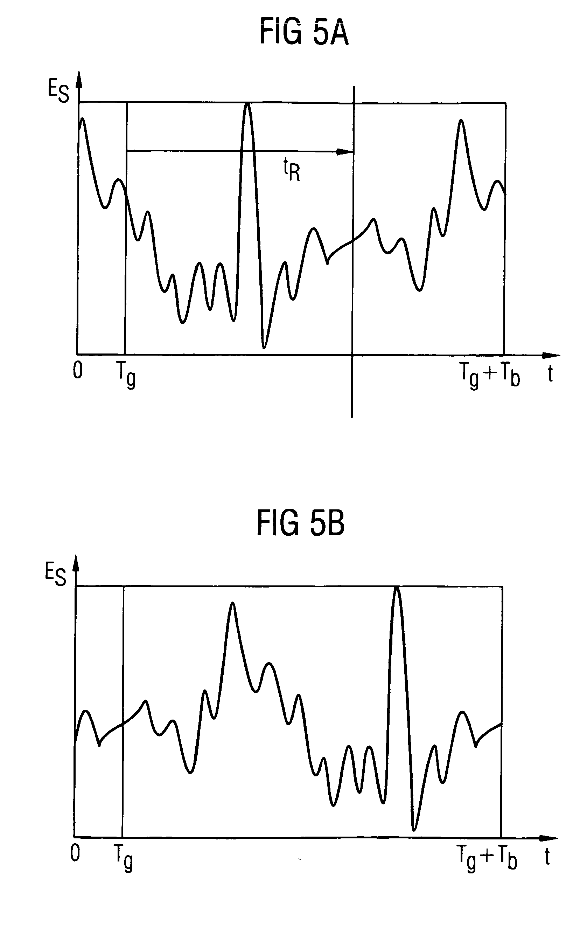

Zur Veranschaulichung zeigt FIG 5a den zeitlichen Energieverlauf $E_S$ des ursprünglichen Multicarrier-Symbols S(t), d.h. vor Verschiebung der Symbolgrenzen, während FIG 5b den zeitlichen Energieverlauf $E_S$ des zyklisch um die Zeitdauer $t_R$ verschobenen Multicarrier-Symbols $S_R(t_R,t)$ zeigt.

Für das zyklisch verschobene Multicarrier-Symbol $S_R(t_R,t)$ wird nach erfolgter zyklischer Rotation um die Zeitdauer $t_R$ ein neuer Cyclic Prefix gebildet - bezogen auf das Intervall $[T_b, T_g+T_b]$.

Der neue Cyclic Prefix wird im Intervall $[0, T_g]$ an das zyklisch verschobene Multicarrier-Symbol $S_R(t_R,t)$ angefügt.

Bei OFDM-modulierten Signalen bewirkt die beschriebene zyklische Rotation um die Zeitdauer $t_R$ für jeden Unterträger der Frequenz $f_S$ im Basisband eine andere Phasenverschiebung, nämlich jeweils um einen Wert von ($2\pi$ $f_S \cdot t_R$) im neuen Symbol $S_R(t_R,t)$. Somit wird jedes ursprüngliche Symbol S(t) entsprechend der Frequenz $f_S$ des Unterträgers mit der komplexen Zahl $e^{j2\pi\,f_S\cdot t_R}$ multipliziert.

Die sendeseitig erfolgte Einzelsymbol-Transformation muss empfängerseitig wieder rückgängig gemacht werden.

Nach dieser hinführenden Betrachtung wird das erfindungsgemäße Verfahren anhand von vier Verfahrensschritten näher erläutert.

In einem ersten Schritt des erfindungsgemäßen Verfahrens wird eine gewichtete zeitliche Energieverteilung eines betrachteten Symbols bzw. Multicarrier-Symbols ermittelt, wobei vorteilhaft auf eine mathematisch exakte Berechnung einer genauen Kanalimpulsantwort h(t) verzichtet werden kann. Es wird lediglich mit einer hinreichend genauen Näherung $h_N(t)$ ein Abklingverhalten der Kanalimpulsantwort h(t) des Übertragungskanals nachempfunden.

Dabei kann in einer ersten Ausführungsform zur Näherung der Kanalimpulsantwort h(t) eine Fensterfunktion verwendet werden, deren Breite dem ein- oder mehrfachen der Dispersion $t_{rms}$ der Kanalimpulsantwort h(t) entspricht.

Im einfachsten Fall wird als Fensterfunktion eine Rechteckfunktion verwendet, die bei geringem Rechenaufwand bereits gute Resultate erbringt. Diese ist mit einer Fensterbreite von $2*t_1$ wie folgt festgelegt:

$h_N(t) = 1$ für $-t_1 \leq t \leq t_1$
$h_N(t) = 0$ sonst.

Für eine verbessere Näherung des Abklingverhaltens kann in einer zweiten Ausführungsform beispielsweise eine Exponentialfunktion oder eine Lognormal-Funktion verwendet werden.

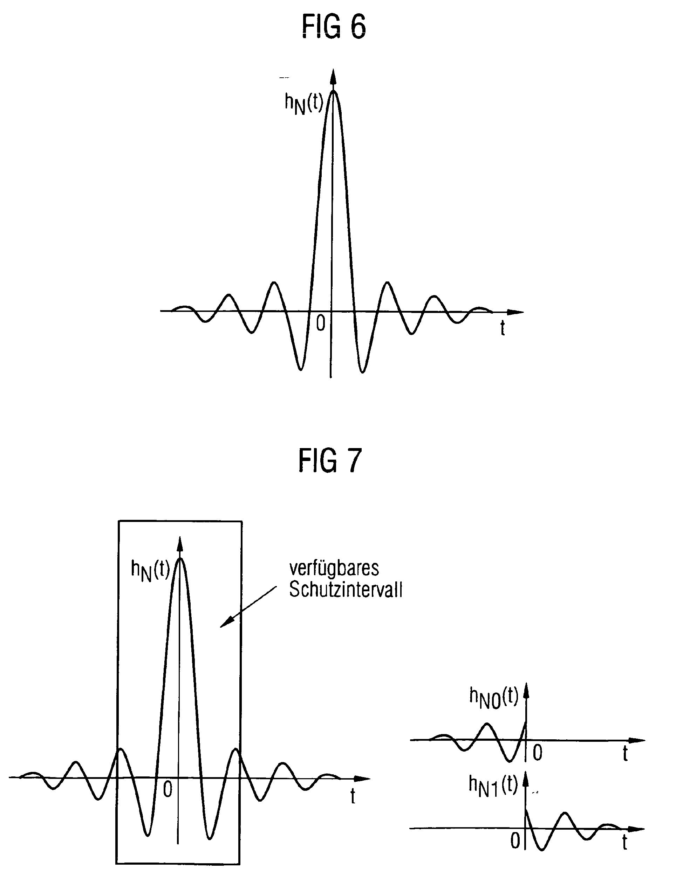

Fig 6 zeigt in einer dritten Ausführungsform eine weiter verbesserte Näherung $h_N(t)$ der Kanalimpulsantwort h (t), die auf einem in den Zeitbereich transformierten Produkt von bekannten Übertragungsfunktionen eines verwendeten Sendefilters einerseits und eines verwendeten Empfangsfilter andererseits basiert.

Diese drei Ausführungsformen können in einer - hier nicht dargestellten - vierten Ausführungsform durch Faltung kombiniert werden, wodurch eine gemeinsame, verlängerte Näherung $h_N(t)$ gebildet wird. Insbesondere ist eine Kombination der zweiten und der dritten Ausführungsform vorteilhaft, die eine Kombination von Sendefilter-, Empfangsfilter- und Mehrwegeausbreitungs-Impulsantwort repräsentiert.

FIG 7 zeigt die Ermittlung einer ersten Wichtungsfunktion $h_{N0}(t)$ und einer zweiten Wichtungsfunktion $h_{N1}(t)$ aus der in FIG 6 beschriebenen Näherung $h_N(t)$.

Die beiden Wichtungsfunktionen $h_{N0}(t)$ und $h_{N1}(t)$ werden zur Ermittlung der gewichteten zeitlichen Energieverteilung des betrachteten Symbols benötigt.

Die erste Wichtungsfunktion $h_{N0}(t)$ wird für die Ermittlung einer geschätzten Intersymbol-Interferenz benötigt, die das in FIG 5b beschriebene Symbol $S_R(t_R,t)$ auf ein vorhergehend übertragenes Symbol ausübt.

Die zweite Wichtungsfunktion $h_{N1}(t)$ wird für die Ermittlung der geschätzten Intersymbol-Interferenz benötigt, die das in FIG 5b beschriebene Symbol $S_R(t_R,t)$ auf ein nachfolgend übertragenes Symbol ausübt.

Zunächst wird ein verfügbares Schutzintervall ermittelt. Dieses Schutzintervall ergibt sich, wenn von einem ursprünglichen Schutzintervall der Zeitdauer $T_g$ ein vorgegebener zulässiger Fehler einer zeitlichen Synchronisation zwischen Sender und Empfänger abgezogen wird.

Dieses verfügbare Schutzintervall wird mit der Näherung $h_N(t)$ derart überlagert, dass ein erster Abschnitt links vom Schutzintervall und ein zweiter Abschnitt rechts vom Schutzintervall gebildet wird bzw. dass zwei abschnittsweise definierte Funktionen aus der Näherung $h_N(t)$ ausgeschnitten werden.

Der linke Abschnitt stellt dann die erste Wichtungsfunktion $h_{N0}(t)$ dar, während der rechte Abschnitt die zweite Wichtungsfunktion $h_{N1}(t)$ darstellt.

Das verfügbare Schutzintervall wurde zeitlich auf der Näherung $h_N(t)$ derart verschoben, dass für die erste Wichtungsfunktionen $h_{N0}(t)$ und für die zweite Wichtungsfunktionen $h_{N1}(t)$ gilt:

$$\int h_{N0}(t)^2\,dt \;+\; \int h_{N1}(t)^2\,dt \;=\; \min$$

Die erste Wichtungsfunktion $h_{N0}(t)$ wird nachfolgend zeitlich derart verschoben, dass sie bei t=0 endet, womit sie im Zeitbereich $t \leq 0$ definiert ist.

Die zweite Wichtungsfunktion $h_{N1}(t)$ wird zeitlich derart verschoben, dass sie bei t=0 beginnt, womit sie im Zeitbereich $t \geq 0$ definiert ist.

Der nachfolgend beschriebene Ansatz wird bevorzugt bei einer Kanalimpulsantwort, die sich zeitlich lediglich unwesentlich ändert, gewählt.

Der Schätzwert für die Energie $E_{ISI}$ der Intersymbolinterferenz des Symbols $S_R(t_R,t)$ auf ein vorhergehend übertragenes Symbol bzw. auf ein nachfolgend übertragenes Symbol wird wie folgt berechnet:

$$E_{ISI,N0}(t_R) \; = \; \int_{-\infty}^{0} \; | \; <h_{N0}(t); S_R(t_R - T_g, t)> \; |^2 \; dt$$

$$E_{ISI,N1}(t_R) \; = \; \int_{T_b}^{\infty} \; | \; <h_{N1}(t); S_R(t_R, t)> \; |^2 \; dt$$

mit <a;b> als Faltung der Funktionen a und b.

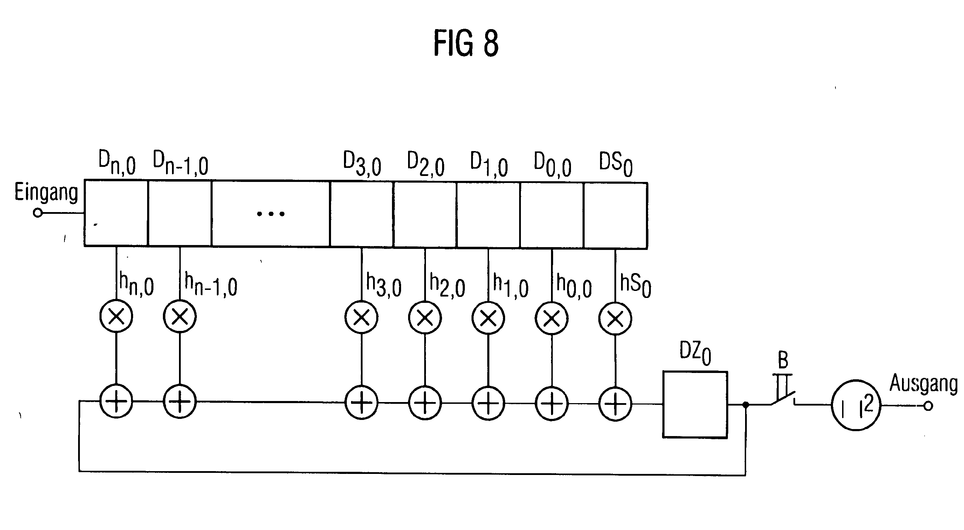

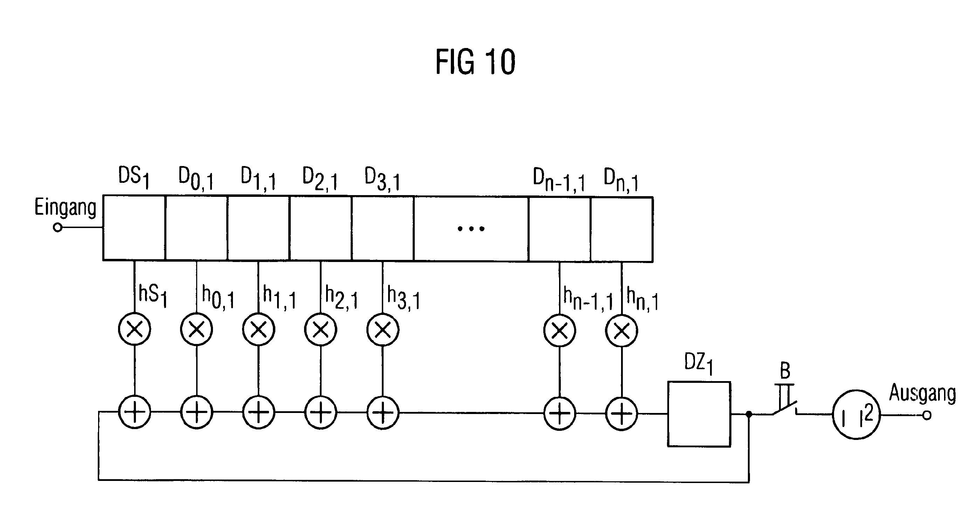

Eine beispielhafte Implementierung zur Berechnung von $E_{ISI,N0}(t_R)$ ist in der später beschriebenen FIG 8 dargestellt, während eine beispielhafte Implementierung zur Berechnung von $E_{ISI,N1}(t_R)$ in der später beschriebenen FIG 10 dargestellt ist.

Bei einer sich zeitlich verändernden Kanalimpulsantwort ist es vorteilhaft, die einzelnen Energiebeiträge zur geschätzten Intersymbol-Interferenz als unkorreliert zu betrachten, da es sonst infolge von Korrelationseffekten durch Verstärkung oder Auslöschung zu einer verfälschten Bestimmung der geschätzten Intersymbol-Interferenzenergie kommt.

Um diese Verfälschungen zu reduzieren werden bei der durchzuführenden Faltung sowohl bei den beiden Wichtungsfunktionen als auch beim Symbol selbst nur die jeweiligen Betragsquadrate der komplexen Symboldaten (Samples) verwendet, um die Symbolenergieverteilung zu bestimmen.

Somit ergibt sich als alternativer Ansatz für eine sich zeitlich verändernde Kanalimpulsantwort:

$$E_{ISI,N0}(t_R) \; = \; \int_{-\infty}^{0} \; <|h_{N0}(t)|^2; |S_R(t_R - T_g, t)|^2> \; dt$$

$$E_{ISI,N1}(t_R) \; = \; \int_{T_b}^{\infty} \; <|h_{N1}(t)|^2; |S_R(t_R, t)|^2> \; dt$$

mit <a;b> als Faltung der Funktionen a und b.

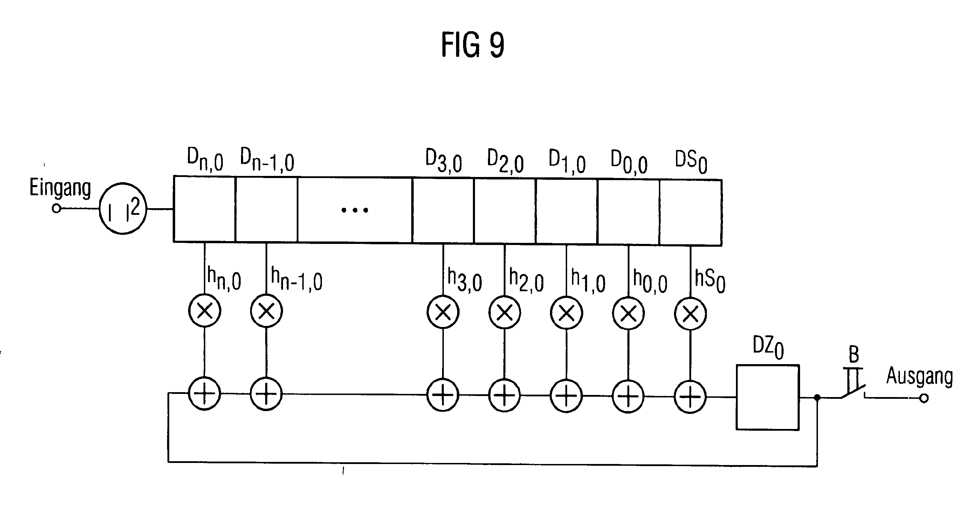

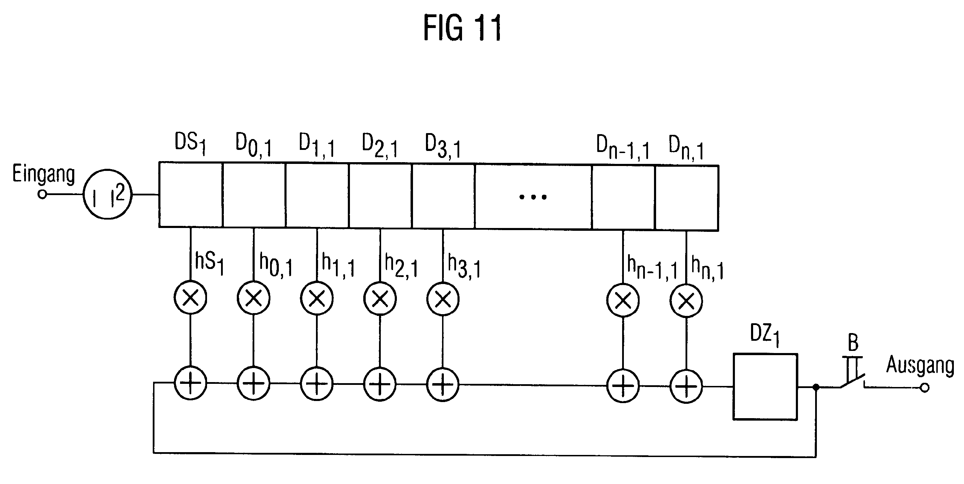

Eine beispielhafte Implementierung zur Berechnung von $E_{ISI,N0}(t_R)$ ist in der später beschriebenen FIG 9 dargestellt, während eine beispielhafte Implementierung zur Berechnung von $E_{ISI,N1}(t_R)$ in der später beschriebenen FIG 11 dargestellt ist.

In einem zweiten Schritt des erfindungsgemäßen Verfahrens wird eine geeignete Symbolgrenze ausgewählt. Dazu wird unter Berücksichtigung der Beziehung

$$E_{ISI,N}(t_R) \; = \; E_{ISI,N0}(t_R) \; + \; E_{ISI,N1}(t_R) \; = \; min$$

für die durchzuführende zyklische Rotation die Zeitdauer $t_R$ derart bestimmt, dass die geschätzte Intersymbol-Interferenzenergie $E_{ISI,N}(t_R)$ minimal wird.

Bei einer ersten Variante zur Wahl der geeigneten Symbolgrenzen wird die Beziehung

$$min(E_{ISI,N}(t_R)) \; < \; R \cdot E_{ISI,N}(t_R=0)$$

für einen vorher definierten Schwellwert R < 1 erfüllt, bevor die zyklische Rotation mit $t_R \neq 0$ durchgeführt wird.

Der Schwellwert R ist frei wählbar, wobei der Schwellwert R eine Intersymbol-Interferenzenergie als Grenze definiert, die nach Durchführung der Symbolrotation unterschritten sein muss.

Vorteilhaft wird bei dieser ersten Variante für den Fall eines nur geringfügigen Verbesserungspotentials bei der Reduzierung der Intersymbol-Interferenzenergie auf die erzielbare geringfügige Verbesserung verzichtet und das originale Symbol bzw. Signal beibehalten.

In einer zweiten Variante zur Wahl der geeigneten Symbolgrenzen wird zusätzlich oder alternativ ein für die Zeitdauer $t_R$ zur Verfügung stehender Spielraum eingeschränkt.

Besonders vorteilhaft ist die Einschränkung der Zeitdauer $t_R$ innerhalb folgender Grenzen:

$$0 \leq t_R \leq T_b \ / \ ggT(f_{Pilot} - f_{Pilot1})$$

- wobei beispielsweise zwei zueinander benachbarte Pilotträger $f_{Pilot}$ und $f_{Pilot1}$ verwendet werden und
- wobei "$ggT(f_{Pilot} - f_{Pilot1})$" der größte gemeinsame Teiler aller Differenzen zwischen ausgewählten Pilotfrequenz-Indizes und einem ersten Pilotfrequenz-Index ist.

Mit Bezug auf den Übertragungsstandard "WiMax, OFDM 256" wird das Sendesignal auf 256 Unterträger aufgeteilt, von denen 200 Unterträger benutzt werden. Die Indizes für Pilotträgerfrequenzen wurden wie folgt festgelegt:

$$-88, \ -63, \ -38, \ -13, \ 13, \ 38, \ 63, \ 88.$$

In einer dritten Variante zur Wahl der geeigneten Symbolgrenzen erfolgt die Energieoptimierung der Symbolgrenzen für eine Kombination aus L aufeinander folgenden Symbolen.

Dazu wird folgende Summe optimiert:

$$\sum_{Sy=1}^{L} E_{ISI,N}(t_R) \ = \ \sum_{Sy=1}^{L} \left( E_{ISI,N0}(t_R) \ + \ E_{ISI,N1}(t_R) \right) \ = \ min$$

Diese Methode ist besonders vorteilhaft bei Verfahren einsetzbar, bei denen die Kanalschätzung nicht in jedem Multicarrier-Symbol erfolgt, bzw. bei denen die zur Kanalschätzung erforderlichen Pilotsignale nicht parallel zu jedem Symbol übertragen werden.

In einem dritten Schritt des erfindungsgemäßen Verfahrens wird die sendeseitige Transformation des Multicarrier-Symbols vor dem Senden durchgeführt. Dazu wird das Symbol durch eine zyklische Rotation im Zeitbereich um die Zeitdauer $t_R$ in das neue Multicarrier-Symbol transformiert.

Diese Transformation entspricht im Frequenzbereich einer Multiplikation des ursprünglichen Symbols mit einer komplexen Zahl $e^{j2\pi \, f_S \cdot t_R}$, wobei die Frequenz $f_S$ die zugeordnete Frequenz eines Basisband-Unterträgers ist.

In einem vierten Schritt des erfindungsgemäßen Verfahrens wird die empfangsseitige Rücktransformation des empfangenen Multicarrier-Symbols durchgeführt. Diese erfolgt entsprechend invertiert zur sendeseitigen Transformation.

Zu diesem Zweck muss empfangsseitig die Zeitdauer $t_R$ ermittelt werden bzw. muss die Zeitdauer $t_R$ empfangsseitig durch Übertragung bekannt sein.

In einer ersten Variante wird auf einem Unterträger, der direkt neben einem DC-Träger angeordnet ist, ein vorher festgelegtes Einzelsymbol als Pilotsymbol bzw. Pilot gesendet. Der Unterträger weist somit als Frequenz $f_S = f_1$ auf, wobei $f_1$ der Abstand zweier benachbarter Unterträger bei einer OFDM-Übertragung ist.

Aus dem empfangenen Pilotsymbol kann direkt die komplexe Zahl $e^{j2\pi \, f_1 \cdot t_R}$ und damit auch die Zeitdauer $t_R$ bestimmt werden.

In einer genaueren zweiten Variante werden beispielsweise auf zwei benachbarten Unterträgern der Frequenzen $f_S$ und $f_S + f_1$ bekannte Einzelsymbole als Pilot gesendet. Aus den empfangenen Einzelsymbolen kann die Zeitdauer $t_R$ gemäß der folgenden Beziehung bestimmt werden:

$$e^{j2\pi f_1 \cdot t_R} = \frac{e^{j2\pi (f_S + f_1) \cdot t_R}}{e^{j2\pi f_S \cdot t_R}}$$

Aufgrund der Division entfallen gleichartige, durch den Übertragungskanal verursachte Verfälschungen der einzelnen Symbole.

Innerhalb des Übertragungsstandards "WiMax, OFDM 256" wird das Sendesignal auf 256 Unterträger aufgeteilt, von denen 200 Unterträger benutzt werden. Die Indizes der Pilotfrequenzen für die Kanalschätzung sind hier wie folgt festgelegt:

$$-88, \ -63, \ -38, \ -13, \ 13, \ 38, \ 63, \ 88.$$

Mit Hilfe der Beziehung

$$\frac{e^{j2\pi f_{13} \cdot t_R} \cdot e^{j2\pi f_{13} \cdot t_R}}{e^{j2\pi f_{38} \cdot t_R} \cdot e^{j2\pi f_{-13} \cdot t_R}} = \frac{e^{j2\pi (13f_1) \cdot t_R} \cdot e^{j2\pi (13f_1) \cdot t_R}}{e^{j2\pi (38f_1) \cdot t_R} \cdot e^{j2\pi (-13f_1) \cdot t_R}} = e^{j2\pi f_1 \cdot t_R}$$

kann die Zeitdauer $t_R$ eindeutig bestimmt werden.

Durch zusätzliche Verwendung von Beziehungen mit höheren Frequenzünterschieden kann die Genauigkeit der in der vorherigen Beziehung eindeutig bestimmten Zeitdauer $t_R$ verbessert werden.

Beispielsweise erhält man mit der Beziehung

$$\frac{e^{j2\pi f_{13} \cdot t_R}}{e^{j2\pi f_{-13} \cdot t_R}} = \frac{e^{j2\pi (13f_1) \cdot t_R}}{e^{j2\pi (-13f_1) \cdot t_R}} = e^{j2\pi 26f_1 \cdot t_R}$$

eine 26-fach verbesserte Genauigkeit.

Zur Verbesserung der Genauigkeit werden weitere (voneinander unabhängige) Beziehungen, die aus den bereits für die durchzuführende Kanalschätzung verwendeten Pilotsymbolen stammen, gegebenenfalls miteinander kombiniert.

Alternativ zur oben genannten empfängerseitig erfolgenden Ermittlung der Zeitdauer $t_R$ kann die Zeitdauer $t_R$ auch (gegebenenfalls codiert) mit jedem Multicarrier-Symbol übertragen werden.

FIG 8 zeigt eine beispielhafte Implementierung zur Berechnung der Multicarrier-Symbol-Energieverteilung $E_{ISI,N0}(t_R)$ anhand eines digitalen FIR-Filters.

Diese wird mit Bezug auf die Ausführungen in FIG 7 unter der Voraussetzung durchgeführt, dass sich die Kanalimpulsantwort zeitlich nur unwesentlich ändert.

Das FIR-Filter weist insgesamt n+2 Datenzellen $D_{0,0}$ bis $D_{n,0}$ sowie $DS_0$, $DZ_0$ auf. (Mit "n" als Samples der Wichtungsfunktion - 1).

Weiter sind für jede der Datenzellen $D_{n,0}$ bis $D_{0,0}$ und $DS_0$ jeweils zugeordnete Multiplikationseinrichtungen mit Koeffizienten $h_{n,0}$ bis $h_{0,0}$ und $hS_0$ vorgesehen.

Die Koeffizienten $h_{k,0}$ mit k = 0 ...n werden jeweils aus den Datensymbolen bzw. Samples der Wichtungsfunktion $h_{N0}(t)$ ermittelt. Es gilt:

$$h_{k,0} = h_{N0}(t_k).$$

Bei der oben beschriebenen alternativen Berechnung, bei der die Betragsquadrate der Wichtungsfunktionen verwendet werden, wird zusätzlich der Koeffizient $hS_0$ benötigt, der aus der negative Summe aller Koeffizienten $h_{k,0}$

berechnet wird. Es gilt:

$$hS_0 \;=\; -\; \sum_{k=0}^{n} h_{k,0}$$

Jedes Multicarrier-Symbol enthält ohne den Cyclic Prefix insgesamt m Symboldaten (Samples). Für jedes Multicarrier-Symbol werden somit am Eingang des FIR-Filters insgesamt (m+n) Symboldaten benötigt.

Dabei wird immer dann, wenn das Ende eines Multicarrier-Symbols erreicht ist, die Datenfolge mit den Symboldaten vom Anfang des Symbols beginnend fortgesetzt, bis insgesamt (m+n) Symboldaten eingegangen sind.

Zu Beginn der Berechnung werden alle Datenzellen $D_{0,0}$ ... $D_{n,0}$ sowie die Datenzellen $DS_0$ und $DZ_0$ auf einen Wert "0" gesetzt. Ein vorgesehener Schalter B ist zunächst geöffnet.

Die Datenzellen werden schrittweise mit (n+1) Symboldaten von links nach rechts derart gefüllt, dass das erste komplexwertige Symbolsample als Datum dem Wert des Multicarrier-Symbols (ohne Cyclic Prefix) beim Zeitpunkt $T_b$-$T_g$ entspricht. Mit diesem Wert würde der Cyclic Prefix beginnen.

Die Datenzelle $DS_0$ wird vorerst nicht belegt. In jedem Füllschritt werden die Werte in den Datenzellen $D_{0,0}$ ... $D_{n,0}$ mit den dazugehörigen Koeffizienten $h_{0,0}$ ... $h_{n,0}$ gewichtet und mit einer Zwischensumme ZS, die in der Datenzelle $DZ_0$ gebildet wird, zu einer neuen Zwischensumme aufsummiert. Diese neue Zwischensumme ersetzt nachfolgend die bisherige Zwischensumme.

Sind die Datenzellen mit den ersten (n+1) Symboldaten gefüllt, wird der Schalter B geschlossen und die berechnete Zwischensumme ZS kann als erster Wert für die Berechnung der Interferenzenergie $E_{ISI,N0}(t_R=0)$ verwendet werden- wobei nachfolgend ein Betragsquadrat gebildet wird.

Nun werden die Datenzellen $D_{0,0}$ ... $D_{n,0}$, $DS_0$ mit weiteren Symboldaten gefüllt. Die Datenzelle DZ erhält in jedem Schritt einen neuen Wert, dessen Betragsquadrat einen Wert für $E_{ISI,N0}(t_R)$ ergibt. Die Zwischensumme ZS ist über den jetzt geschlossen Schalter B verfügbar und die Betragsquadrate können gespeichert werden. Aus den (m+n) Symboldaten werden insgesamt m Schätzwerte (Samples) für die Intersymbol-Interferenzenergie $E_{ISI,N0}(t_R)$ erhalten.

Dabei wird m>n vorausgesetzt, d.h. die Symboldauer ist größer als die Dauer der Wichtungsfunktion. Falls dies nicht der Fall ist, wird die Wichtungsfunktion gekürzt.

FIG 9 zeigt eine beispielhafte Implementierung zur Berechnung der Multicarrier-Symbol-Energieverteilung $E_{ISI,N0}(t_R)$ anhand eines digitalen FIR-Filters.

Diese wird mit Bezug auf die Ausführungen in FIG 7 unter der Voraussetzung durchgeführt, dass sich die Kanalimpulsantwort zeitlich wesentlich ändern kann.

Hier werden die Datenzellen mit den Betragsquadraten der Symboldaten gefüllt und die Koeffizienten $h_{k,0}$ sind die Betragsquadrate der Abtastwerte der Wichtungsfunktion.

Es gilt:

$$h_{k,0} \;=\; \left| h_{N0}(t_k) \right|^2.$$

Die Funktionsweise dieser Implementierung ist im Wesentlichen identisch zu der in FIG 8 dargestellten, jedoch entfällt hinter dem Schalter B die Bildung der Betragsquadrate.

FIG 10 zeigt eine beispielhafte Implementierung zur Berechnung der Multicarrier-Symbol-Energieverteilung $E_{ISI,N1}(t_R)$ anhand eines digitalen FIR-Filters, die mit Bezug auf die Ausführungen in FIG 7 unter der Voraussetzung durchgeführt wird, dass sich die Kanalimpulsantwort zeitlich nur unwesentlich ändert.

FIG 11 zeigt eine beispielhafte Implementierung zur Berechnung der Multicarrier-Symbol-Energieverteilung $E_{ISI,N1}(t_R)$ anhand eines digitalen FIR-Filters, die mit Bezug auf die Ausführungen in FIG 7 unter der Voraussetzung durchgeführt wird, dass sich die Kanalimpulsantwort zeitlich wesentlich ändern kann.

Der in FIG 10 und FIG 11 gezeigte grundsätzliche Aufbau entspricht dem Aufbau, der in FIG 8 und FIG 9 gezeigt wird. Auch hier steht nach (n+1) Symboldaten ein erster Wert zur Verfügung, wobei insgesamt (m+n) Symboldaten eingespeist werden.

Abweichend zu FIG 8 und zu FIG 9 wird hier jedoch bei der Füllung der Datenzellen mit dem Symboldaten-Index (m-n) begonnen.

Für die Koeffizienten $hS_1$, $h_{k,1}$ gilt folgende geänderte Zuordnung zu den Datenzellen sowie eine Invertierung des Vorzeichens:

$$h_{k,1} = - h_{N1}(t_k) \quad \text{für FIG 10, und}$$

$$h_{k,1} = - |h_{N1}(t_k)|^2 \quad \text{für FIG 11, und}$$

$$hS_1 = - \sum_{k=0}^{n} h_{k,1} \quad \text{für FIG 10 und 11.}$$

Die Länge des FIR-Filters "n+2" kann bei der Berechnung der Funktionen von $E_{ISI,N0}(t_R)$ und $E_{ISI,N1}(t_R)$ jeweils einen anderen Wert annehmen.

Die beiden Funktionen $E_{ISI,N0}(t_R)$ und $E_{ISI,N1}(t_R)$ werden addiert. Nachfolgend wird der zugehörige Index k zum Argument $t_R$ vom Minimum der Summe:

$$E_{ISI,k} = E_{ISI,N}(t_R) = E_{ISI,N0}(t_R) + E_{ISI,N1}(t_R) = min$$

bestimmt.

Abschließend wird das Symbol um (k-1) Indizes zyklisch verschoben, senderseitig mit einem Cyclic-Prefix versehen und zum Empfänger übertragen.

**Patentansprüche**

1. Verfahren zur Reduzierung einer Intersymbol-Interferenzenergie, die durch Faltung einer Kanalimpulsantwort (h(t)) eines Übertragungskanals mit einem Grenzbereich eines ersten Symbols bei einem zum ersten Symbol vorhergehend übertragenen zweiten Symbol verursacht wird und die durch Faltung der Kanalimpulsantwort (h(t)) des Übertragungskanals mit einem Grenzbereich des ersten Symbols bei einem zum ersten Symbol nachfolgend übertragenen dritten Symbol verursacht wird, bei der das zu sendende erste Symbol durch zyklische Rotation im Zeitbereich um eine Zeitdauer $t_R$ in ein neues Symbol ($S_R$) transformiert wird,

   **dadurch gekennzeichnet, daß** sendeseitig die Kanalimpulsantwort ($h_N(t)$) zumindest näherungsweise ermittelt wird;

   aus der Kanalimpulsantwort ($h_N(t)$) eine erste Wichtungsfunktion ($h_{N0}(t)$) ermittelt wird, mit der eine zeitabhängige, gewichtete Schätzung der Intersymbol-Interferenzenergie $E_{ISI,N0}(t_R)$, die das erste Symbol auf das zweite Symbol ausübt, berechnet wird;

   aus der Kanalimpulsantwort eine zweite Wichtungsfunktion ($h_{N1}(t)$) ermittelt wird, mit der eine zeitabhängige, gewichtete Schätzung der Intersymbol-Interferenzenergie $E_{ISI,N1}(t_R)$, die das erste Symbol auf das dritte Symbol ausübt, berechnet wird;

   die Zeitdauer $t_R$ ermittelt wird, bei der die Summe der beiden gewichteten geschätzten Intersymbol-Interferenzenergien minimal wird,

   - bei dem für das neue Symbol ($S_R$) ein Cyclic Prefix (CP) ermittelt wird und das neue Symbol ($S_R$) mit vorangestellten Cyclic Prefix (CP) über den Übertragungskanal gesendet wird.

2. Verfahren nach Anspruch 1, bei dem die Ermittlung der angenäherten Kanalimpulsantwort ($h_N(t)$) basierend auf einem in den Zeitbereich transformierten Produkt bekannter Übertragungsfunktionen von verwendeten Sende- und Empfangsfiltern durchgeführt wird.

3. Verfahren nach Anspruch 1 oder 2, bei dem zur Näherung des Abklingverhaltens der Kanalimpulsantwort ($h_N(t)$) eine Exponentialfunktion oder eine Lognormal-Funktion verwendet wird.

4. Verfahren nach einem der vorhergehenden Ansprüche,

- bei dem zur Ermittlung der ersten Wichtungsfunktion ($h_{N0}$(t)) und der zweiten Wichtungsfunktion ($h_{N1}$(t)) unter Berücksichtigung vorgegebener Fehler einer zeitlichen Synchronisation zwischen Sender und Empfänger ein verfügbares Schutzintervall ermittelt wird,

- bei dem das verfügbare Schutzintervall mit der angenäherten Kanalimpulsantwort ($h_N$(t)) im Zeitbereich derart überlagert wird, dass ein verbleibender erster Abschnitt der Kanalimpulsantwort die erste Wichtungsfunktion ($h_{N0}$(t)) bildet und ein verbleibender zweiter Abschnitt der Kanalimpulsantwort ($h_N$(t)) die zweite Wichtungsfunktion ($h_{N1}$(t)) bildet, und

- bei dem für die erste Wichtungsfunktion ($h_{N0}$(t)) und für die zweite Wichtungsfunktion ($h_{N1}$(t)) gilt:

$$\int h_{N0}(t)^2 \, dt + \int h_{N1}(t)^2) \, dt = \min$$

mit:

$h_{N0}$(t) als erster Wichtungsfunktion, und
$h_{N1}$(t) als zweiter Wichtungsfunktion

5. Verfahren nach Anspruch 4, bei dem unter der Voraussetzung einer sich zeitlich lediglich unwesentlich ändernden Kanalimpulsantwort (h(t)) die zeitabhängige, gewichtete Schätzung der Intersymbol-Interferenzenergie wie folgt berechnet wird:

$$E_{ISI,N0}(t_R) = \int_{-\infty}^{0} |\, <h_{N0}(t); S_R(t_R - T_g, t)>\,|^2 \, dt$$

$$E_{ISI,N1}(t_R) = \int_{T_b}^{\infty} |\, <h_{N1}(t); S_R(t_R, t)>\,|^2 \, dt$$

mit:

<a;b> als Faltung der Funktionen a und b,
$E_{ISI,N0}$($t_R$) als geschätzte Intersymbol-Interferenzenergie des ersten Symbols auf das zweite Symbol,
$E_{ISI,N1}$($t_R$) als geschätzte Intersymbol-Interferenzenergie des ersten Symbols auf das dritte Symbol,
$t_R$ als ermittelte Zeitdauer für die zyklische Transformation,
$T_g$ als Cyclic Prefix - Zeitdauer,
$S_R$ als um die Zeitdauer $t_R$ verschobene Symbolenergieverteilung des ersten Symbols.

6. Verfahren nach Anspruch 4, bei dem unter der Voraussetzung einer sich zeitlich ändernden Kanalimpulsantwort (h(t)) die zeitabhängige, gewichtete Schätzung der Intersymbol-Interferenzenergie wie folgt berechnet wird:

$$E_{ISI,N0}(t_R) = \int_{-\infty}^{0} <|h_{N0}(t)|^2; |S_R(t_R - T_g, t)|^2> \, dt$$

$$E_{ISI,N1}(t_R) = \int_{T_b}^{\infty} <|h_{N1}(t)|^2; |S_R(t_R,t)|^2> dt$$

mit:

<a;b> als Faltung der Funktionen a und b,
$E_{ISI,N0}(t_R)$ als geschätzte Intersymbol-Interferenzenergie des ersten Symbols auf das zweite Symbol,
$E_{ISI,N1}(t_R)$ als geschätzte Intersymbol-Interferenzenergie des ersten Symbols auf das dritte Symbol,
$t_R$ als ermittelte Zeitdauer für die zyklische Transformation,
$T_g$ als Cyclic Prefix - Zeitdauer,
$S_R$ als um die Zeitdauer $t_R$ verschobene Symbolenergieverteilung des ersten Symbols.

7. Verfahren nach Anspruch 5 oder 6, bei dem unter Berücksichtigung von:

$$E_{ISI,N}(t_R) = E_{ISI,N0}(t_R) + E_{ISI,N1}(t_R) = min$$

die Zeitdauer $t_R$ für die zyklische Rotation bestimmt wird.

8. Verfahren nach Anspruch 7, bei dem zur zyklischen Rotation jedes ursprüngliche Einzelsymbol mit einer komplexen Zahl $e^{j2\pi f_S \cdot t_R}$ im Frequenzbereich multipliziert wird, wobei $f_S$ eine zugeordnete Unterträgerfrequenz im Basisband ist.

9. Verfahren nach Anspruch 1 oder 8, bei dem empfängerseitig eine invertierte zyklische Rücktransformation von jedem Symbol bei empfangsseitig vorbekannter Zeitdauer $t_R$ durchgeführt wird.

10. Verfahren nach Anspruch 9, bei dem die Zeitdauer $t_R$ unter Verwendung von Pilotsignalen bzw. Pilotsymbolen bestimmt wird.

11. Verfahren nach Anspruch 9, bei dem die sendeseitig bestimmte Zeitdauer $t_R$ auf die Empfängerseite übertragen wird.

12. Verfahren nach einem der vorhergehenden Ansprüche, bei dem Mehrträger-Symbole übertragen werden.

**Claims**

1. Method for providing resources for adapting routing as a reaction to the failure of a network element (L3) in a packet-oriented network formed with nodes (K, K1, K2, K3) and links (L1, L2, L3), with at least for data packets of one traffic class a barring check being conducted by means of limits (BBB(ri,rj)) and data packets not being allowed if this would exceed a limit (BBB(ri,rj)),
in which

- at least one possible malfunction resulting from the failure of a network element (L3) is taken into consideration for determining the limits (BBB(ri,rj)) for the access control, in that

-- routing of a group of data packets in the network is determined for the failure of the network element (L3), and
-- limit values for the access control are determined in accordance with adherence to at least one transmission quality criterion in which routing of the group of data packets is determined for the case of the network disturbed by the failure of the network element (L3), and
-- the limits (BBB(ri,rj)) for access control are fixed in accordance with the limit values defined in this way.

2. Method in accordance with claim 1,
**characterized in that**

- the network element (L3) is specified by a link (L1, L2, L3) or a node (K, K1, K2, K3).

3.  Method in accordance with claim 1 or 2,
    **characterized in that**

    - a failure topology is specified by the networking of nodes (K, K1, K2, K3) through links (L1, L2, L3) on failure of one or more network elements (L3),
    - the limit values for the barring control are determined in accordance with compliance with at least one transmission quality criterion for the routing of the group of data packets of a plurality of failure topologies, and
    - the individual limits (BBB(ri,rj)) for the barring check for the network are fixed in accordance with the relevant minimum of the limit values thus defined.

4.  Method in accordance with claim 3,
    **characterized in that**

    - the plurality of failure topologies includes all topologies

    in which an individual link (L1, L2, L3) has failed.

$$\int h_{N0}(t)^2 \, dt + \int h_{N1}(t)^2) \, dt = \min$$

5.  Method in accordance with claim 3 or 4,
    **characterized in that**

    - the plurality of failure topologies includes all failure topologies in which an individual node (K, K1, K2, K3) has failed.

$$E_{ISI,N0}(t_R) = \int_{-\infty}^{0} \left| <h_{N0}(t); S_R(t_R - T_g, t)> \right|^2 \, dt$$

$$E_{ISI,N1}(t_R) = \int_{T_b}^{\infty} \left| <h_{N1}(t); S_R(t_R, t)> \right|^2 \, dt$$

6.  Method in accordance with one of the claims 3 to 5,
    **characterized in that**

    - the plurality of failure topologies includes topologies in which more than one network element (L3) has failed.

$$E_{ISI,N0}(t_R) = \int_{-\infty}^{0} <\left| h_{N0}(t) \right|^2; \left| S_R(t_R - T_g, t) \right|^2> \, dt$$

$$E_{ISI,N1}(t_R) = \int_{T_b}^{\infty} <|h_{N1}(t)|^2; |S_R(t_R,t)|^2> dt$$

**7.** Method in accordance with one of the previous claims.
**characterized in that**

- a first plurality of limits (BBB(ri,rj)) is determined according to a method in accordance with one of the claims 1 to 6,
- a second plurality of limits (BBB(ri,rj)) is determined without taking failure topologies into consideration,
- for data packets of a first traffic class a barring check is performed by means of the first plurality of limits (BBB(ri,rj)), and
- for data packets of a second traffic class a barring check is performed by means of the second plurality of limits (BBB(ri,rj)),

$$E_{ISI,N}(t_R) = E_{ISI,N0}(t_R) + E_{ISI,N1}(t_R) = min$$

**8.** Method in accordance with one of the previous claims.
**characterized in that**

- a first plurality of limits (BBB(ri,rj)) is determined according to a method in accordance with one of the claims 1 to 6, on the basis of a first plurality of failure topologies,
- a second plurality of limits (BBB(ri,rj)) is determined according to a method in accordance with one of the claims 1 to 6, on the basis of a second plurality of failure topologies,
- for data packets of a first traffic class a barring check is performed by means of the first plurality of limits (BBB(ri,rj)), and
- for data packets of a second traffic class a barring check is performed by means of the second plurality of limits (BBB(ri,rj}), $e^{j2\pi \cdot f_S \cdot t_R}$

**9.** Method in accordance with one of the previous claims,
**characterized in that**

- limits (BBB(ri,rj)) for the barring checks relate to a maximum volume of traffic between an ingress node (ri) and an egress node (rj).

**10.** Method in accordance with one of the previous claims.
**characterized in that**

- limits (BBB(ri,rj)) for the barring checks relate to a maximum volume of traffic for traffic entering the network at an ingress node and a maximum volume of traffic for traffic leaving the network at an egress node.

**11.** Method in accordance with one of the previous claims,
**characterized in that**
limits (BBB(ri,rj)) for the barring checks relate to a maximum volume of traffic arriving at an ingress node and routed over a link as well as a maximum volume of traffic leaving at an egress node and routed over a link (L1, L2, L3).

**12.** Router with means for performing a method in accordance with one of the claims 1 to 11.

**Revendications**

**1.** Procédé de réduction d'une énergie de l'interférence intersymboles, qui est causée par convolution d'une réponse impulsionnelle de canal (h (t)) d'un canal de transmission avec une plage limite d'un premier symbole dans un deuxième symbole transmis en précédant le premier symbole, et qui est causée par convolution de la réponse impulsionnelle de canal (h (t)) du canal de transmission avec une plage limite du premier symbole dans un troisième symbole transmis en suivant le premier symbole, dans lequel le premier symbole à émettre est transformé en un nouveau symbole ($S_R$) par rotation cyclique dans la plage de temps d'une durée $t_R$,
**caractérisé en ce que**, côté émission, la réponse impulsionnelle de canal ($h_N$ (t)) est déterminée au moins approximativement ;
**en ce qu'**à partir de la réponse impulsionnelle de canal ($h_N$ (t)), une première fonction de pondération ($h_{N0}$ (t)) est déterminée, au moyen de laquelle une évaluation pondérée, dépendant du temps, de l'énergie de l'interférence intersymboles $E_{ISI,N0}$ ($t_R$), que le premier symbole exerce sur le deuxième symbole, est calculée ;
**en ce qu'**à partir de la réponse impulsionnelle de canal, une deuxième fonction de pondération ($h_{N1}$ (t)) est déterminée, au moyen de laquelle une évaluation pondérée, dépendant du temps, de l'énergie de l'interférence intersymboles $E_{ISI,N1}$ ($t_R$), que le premier symbole exerce sur le troisième symbole, est calculée ;
**en ce que** la durée $t_R$ est déterminée, pendant laquelle la somme des deux énergies pondérées évaluées de l'interférence intersymboles devient minimale,
dans lequel un Cyclic Prefix (CP) est déterminé pour le nouveau symbole ($S_R$) et le nouveau symbole ($S_R$) est émis par l'intermédiaire du canal de transmission, avec le Cyclic Prefix (CP) placé en tête.

2. Procédé selon la revendication 1, dans lequel le calcul de la réponse impulsionnelle de canal ($h_N$ (t)) approximative est réalisé sur la base d'un produit, transformé dans la plage de temps, de fonctions de transmission connues de filtres d'émission et de réception utilisés.

3. Procédé selon la revendication 1 ou 2, dans lequel, pour approximer le comportement d'amortissement de la réponse impulsionnelle de canal ($h_N$ (t)), on utilise une fonction exponentielle ou une fonction log-normale.

4. Procédé selon l'une quelconque des revendications précédentes,

- dans lequel, pour déterminer la première fonction de pondération ($h_{N0}$ (t)) et la deuxième fonction de pondération ($h_{N1}$ (t)) en tenant compte d'erreurs prédéfinies d'une synchronisation temporelle entre émetteur et récepteur, on calcule un intervalle de protection disponible,
- dans lequel l'intervalle de protection disponible est superposé par la réponse impulsionnelle de canal ($h_N$ (t)) approximative dans la plage de temps, de telle manière qu'une première section restante de la réponse impulsionnelle de canal forme la première fonction de pondération ($h_{N0}$ (t)) et qu'une deuxième section restante de la réponse impulsionnelle de canal ($h_N$ (t)) forme la deuxième fonction de pondération ($h_{N1}$ (t)), et
- dans lequel, pour la première fonction de pondération ($h_{N0}$ (t)) et pour la deuxième fonction de pondération ($h_{N1}$ (t)), on a

$$\int h_{N0}(t)^2 \, dt + \int h_{N1}(t)^2) \, dt = \min$$

avec

($h_{N0}$ (t)) en tant que première fonction de pondération et
($h_{N1}$ (t)) en tant que deuxième fonction de pondération.

5. Procédé selon la revendication 4, dans lequel, à condition d'une réponse impulsionnelle de canal (h(t)) changeant temporellement uniquement de manière insignifiante, l'évaluation pondérée, dépendant du temps, de l'énergie de l'interférence intersymboles est calculée comme suit :

$$E_{ISI,N0}(t_R) = \int_{-\infty}^{0} \; |\; <h_{N0}(t)\,;S_R(t_R - T_g,t)> \; |^2 \; dt$$

$$E_{ISI,N1}(t_R) = \int_{T_b}^{\infty} \; |\; <h_{N1}(t)\,;S_R(t_R,t)> \; |^2 \; dt$$

avec

$<a\,;b>$ en tant que convolution des fonctions a et b,

$E_{ISI,N0}(t_R)$ en tant qu'énergie de l'interférence intersymboles évaluée du premier symbole sur le deuxième symbole,

$E_{ISI,N1}(t_R)$ en tant qu'énergie de l'interférence intersymboles évaluée du premier symbole sur le troisième symbole,

$t_R$ en tant que durée calculée pour la transformation cyclique,

$T_g$ en tant que durée du Cyclic Prefix

$S_R$ en tant que répartition de l'énergie des symboles du premier symbole, décalée de la durée $t_R$.

6. Procédé selon la revendication 4, dans lequel, à condition d'une réponse impulsionnelle de canal (h(t)) changeant temporellement, l'évaluation pondérée, dépendant du temps, de l'énergie de l'interférence intersymboles est calculée comme suit :

$$E_{ISI,N0}(t_R) = \int_{-\infty}^{0} \; <|h_{N0}(t)|^2\,;|S_R(t_R - T_g,t)|^2> \; dt$$

$$E_{ISI,N1}(t_R) = \int_{T_b}^{\infty} \; <|h_{N1}(t)|^2\,;|S_R(t_R,t)|^2> \; dt$$

avec

$<a\,;b>$ en tant que convolution des fonctions a et b,

$E_{ISI,N0}(t_R)$ en tant qu'énergie de l'interférence intersymboles évaluée du premier symbole sur le deuxième symbole,

$E_{ISI,N1}(t_R)$ en tant qu'énergie de l'interférence intersymboles évaluée du premier symbole sur le troisième symbole,

$t_R$ en tant que durée calculée pour la transformation cyclique,

$T_g$ en tant que durée du Cyclic Prefix

$S_R$ en tant que répartition de l'énergie des symboles du premier symbole, décalée de la durée $t_R$.

**7.** Procédé selon la revendication 5 ou 6, dans lequel la durée $t_R$ pour la rotation cyclique est calculée en tenant compte de :

$$E_{ISI,N}(t_R) = E_{ISI,N0}(t_R) + E_{ISI,N1}(t_R) = min$$

**8.** Procédé selon la revendication 7, dans lequel, pour la rotation cyclique, chaque symbole individuel d'origine est multiplié par un nombre complexe $e^{j2\pi f_S \cdot t_R}$, $f_s$ étant une fréquence sous-porteuse affectée dans la bande de base.

**9.** Procédé selon la revendication 1 ou 8, dans lequel, côté récepteur, une transformation inverse cyclique invertie de chaque symbole est réalisée lorsque, côté réception, la durée $t_R$ est connue d'avance.

**10.** Procédé selon la revendication 9, dans lequel la durée $t_R$ est déterminée en utilisant des signaux pilotes resp. des symboles pilotes.

**11.** Procédé selon la revendication 9, dans lequel la durée $t_R$ déterminée côté émetteur est transmise au côté récepteur.

**12.** Procédé selon l'une quelconque des revendications précédentes, dans lequel des symboles à porteuses multiples sont transmis.

# FIG 1

SYM1 | SYM2

t

SYM1E | SYM2E

ISI

t

# FIG 2

$|h(t)|^2$

$\bar{t}$

$t_{rms}$

t

# FIG 3

# FIG 4

# FIG 5A

# FIG 5B

## FIG 6

## FIG 7

verfügbares
Schutzintervall

FIG 8

FIG 9

Eingang

$\downarrow^2$

$D_{n,0}$ $D_{n-1,0}$ $D_{3,0}$ $D_{2,0}$ $D_{1,0}$ $D_{0,0}$ $DS_0$

$h_{n,0}$ $h_{n-1,0}$ $h_{3,0}$ $h_{2,0}$ $h_{1,0}$ $h_{0,0}$ $hS_0$

$DZ_0$

B

Ausgang

# FIG 10

# FIG 11

EP 1 713 221 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0396049 A
- WO 0209651 A